# EUROPEAN PATENT SPECIFICATION

(11) **EP 0 878 444 B1**
(45) Date of publication and mention of the grant of the patent: **11.12.2002**
(21) Application number: 98108512.9
(22) Date of filing: 11.05.1998
(51) Int. Cl.: C02F 3/02

(54) **Bio-depurator**
Bio-Reiniger
Purificateur biologique

(30) Priority: 12.05.1997 CR 554697
(43) Date of publication of application: 18.11.1998
(73) Proprietor: Bruso' Bortolozzo, Luigi, San Jose (CR)
(72) Inventor: Bruso' Bortolozzo, Luigi, San Jose (CR)
(74) Representative: Cioni, Carlo

(56) References cited:
- EP-A- 0 555 743
- DE-A- 2 705 732
- DE-C- 19 511 159
- DE-U- 8 704 522
- GB-A- 2 276 617

## Description

This is a premanufactured biological depurator, with an elongated octagonal shape, with polygonal variants, of variable size, constituted by various modular elements, inside of which are placed other elements of a lesser size. All the external elements are premanufactured in special concrete of high resistance; while the internal elements can be manufactured in concrete, glass fiber, plastic PVC lamina, and also it can be used fiber-cement lamina for the internal separation.

The aforementioned elements, once assembled between them, form a recipient which has the function to obtain the depuration of the sewage in a continuous process.

This invention will be applied for the treatment of the sewage of the houses, buildings, commercial premises, restaurants, hotels, cabins, huts, ect.

The current technology at the level of civil works, in the majority of the cases, when it is desired to obtain high levels of efficiency with an important reduction of B.O.D.5 at the exit of the depurator, it uses tanks with various sectors (3-4) with a final amount of air through bumps.

In Costa Rica, at the level of depurators, there are in the market treatment plants of diverse sizes, of high costs, in which are used mechanical devices, and which require a continuous maintenance and functioning expenses.

In virtue of above reasons, taking advantage of my experience of many years, and with the purpose to reduce costs in installations, functioning and maintenance, and at the same time to extend the use of devices of high efficiency, always having in mind the conservation of the natural environment, I present this invention called bio-depurator.

My invention, part of the basic idea, to construct a depurator, small, light to make easier its handling and transportation, is of easy installation, premanufactured in concrete, modular and with a high efficiency, to be installed where such features are required, as for instance: in houses, hotels, commercial premises in the beaches, located in lands in which it is not possible to install septic tanks. Another of the characteristics are identifiable in the fact that there is no need of mechanical devices, nor expenses due to its use and maintenance.

The description of the invention shall be made with reference to the attached drawings that are not to be interpreted as limitative of the scope of the invention itself.

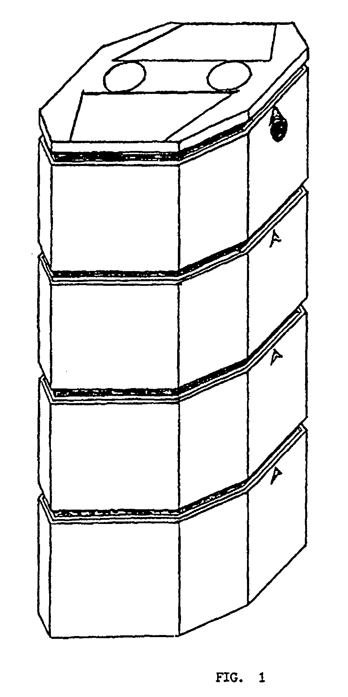

Figure 1 is a perspective view of an embodiment of the Bio-depurator according to the invention;
Figure 2 is a cross-section through a vertical plane of the Bio-depurator of Fig. 1;
Figures 3 and 4 illustrate in detail two operating elements of Bio-depurator of Fig. 2, namely, the exit Flow control device (Control-flug) and a passage duct, respectively
Figure 5 is a cross-section through A - A of the Bio-depurator of Fig. 2;

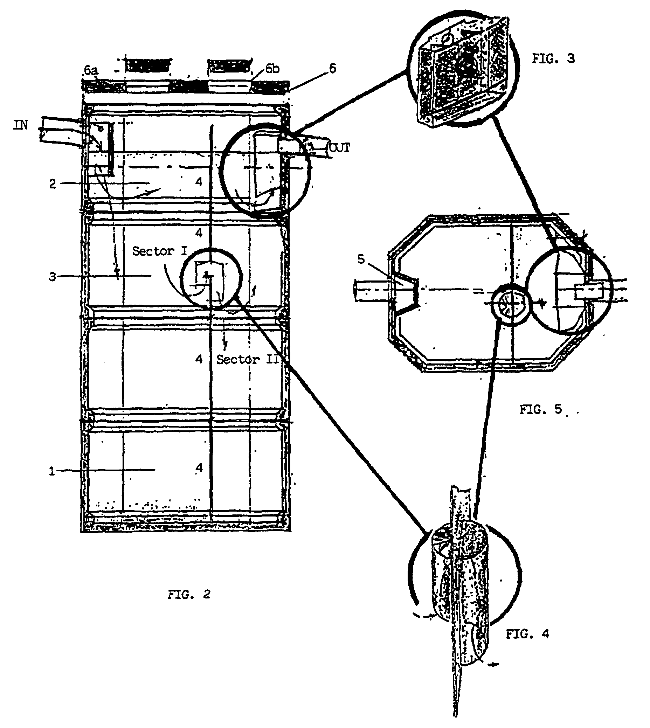

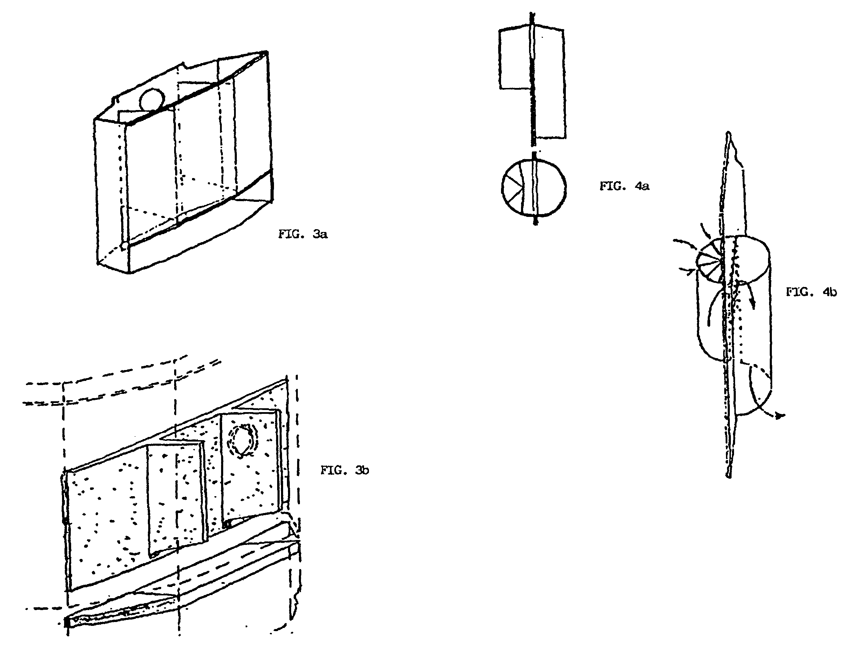

Figure 3A is a different view of the Control-flug of Fig. 3A;
Figure 4A and 4B are different views of the passage duct of Fig. 4;
Figure 3B is a different embodiment of the Control-flug whose external wall are coincident with a portion of the Bio-depurator internal wall;

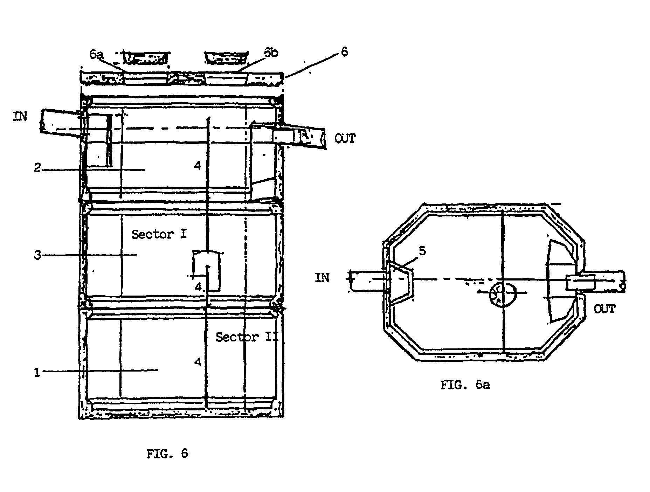

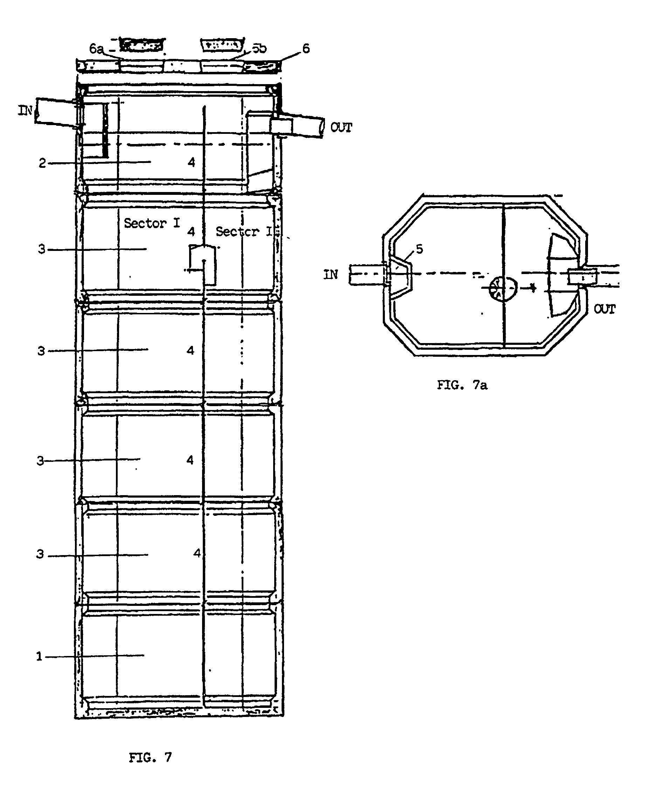

Figures 6 and 7 illustrate two different embodiments of the Bio-depurator having different sizes;
Figures 6A and 7A are cross-sections of the Bio-depurator of Figure 6 and 7, respectively

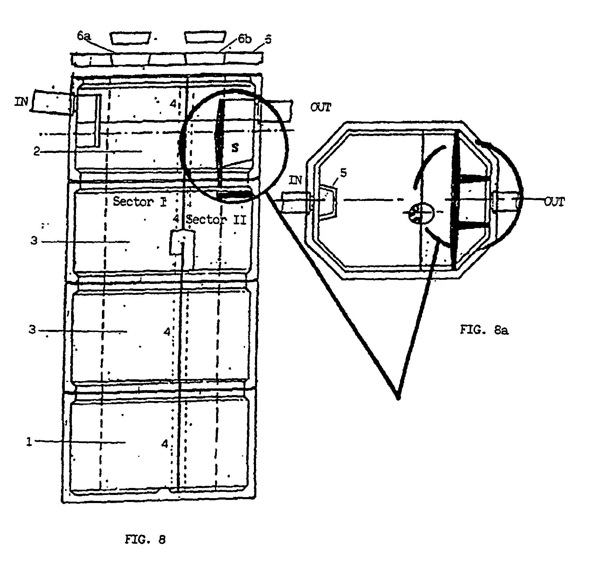

Figures 8 and 8A show a further embodiment of Bio-depurator in which the Control-flug of Fig. 3B is installed.

- The basic structure of the depurator is formed by three main elements complementary one to the others:
   element of bottom (1); rings (3); superior element (2) (see Fig. 2, Fig 6, Fig 7 and Fig 8); in every point of junction, a profile to ensure the assembling must be foreseen.
- The design of the external part of the depurator has an elongated octagonal shape, to make the handling in an inclined land and the stability easier, during the transportation.
- For its functioning (aerobic fermentation) has been foreseen in the superior element (3), a hole of 25 mm where is inserted the tube for the ventilation.
- As a separation between the first sector (SECTOR I) and the second one (SECTOR II), there exist fiber-cement laminas (4) also modular.
- For the passage of the waters under treatment from one sector to the other one, one of the separation laminas has a special duct for the passage of the fluid (Fig 4, 4A Fig. 4B). Such passage duct can be advantageously made of PVC material.
- To form the entrance duct, together with an element separator of foams, it has been designed a trapezoidal element 5 of concrete (Fig. 5A, 6A, 7A and 8A).
- To complete the depuration, before the exit, it has been designed a device of stagnation and decantation ( Control-flug, Fig. 3A) made of PVC, and whenever possible, will be used an element of concrete (Fig 3B), which linked to the walls of the superior element of the depurator, will obtain the same former conformation (Fig. 8A).
- To complete the depurator, it was designed a lid 6 with two little lids 6A and 6B which correspond, one to the sector of the entrance, and the other one to the sector of the exit; the above serve for any inspection, or if necessary, to clean it.

The process of treatment of the sewage starts with the entrance of the same in SECTOR I of the Bio-depurator through a trapezoidal duct 5, placed in a superior element 2, which oblige them to enter down the surface of the internal liquid. Once they same go out of the duct, they separate in the liquid mass, with the characteristic to get separated at different levels, as per its weight. The light solids come closer to the surface, where they make contact with the air; the heavy solids will be deposited in the bottom; while the intermediate part will keep almost clean.

The parts which fall down in the bottom discompose themselves, due to the anaerobian fermentation, leave in the bottom their mineral parts, while the gases go up towards the surface, where they will be expelled through the ventilation tube.

The light parts which are in the superior part of the liquid, undergo an aerobic fermentation because of the bacterial fiber (microscopic fungus) with a production of gases and heavy particles, which will fall down in the bottom, completing the process with an oxidation of the larger part.

The medium part of the waters will be kept almost clean, and in this last layer are those which through the device of Fig 4, 4A and 4B, will pass to the SECTOR II, where once again they will separate, leaving an intermediate layer, even cleaner.

In SECTOR II will develop once again anaerobian and aerobic fermentations, in a more diluted environment, with formation of gases and oxidation. From the medium part of the second SECTOR II (this time even larger), the water almost clean will enter in the Control-Flug, Fig. 3, 3A and 3B, where afterwards it will stagnate, will drop the rest of the few solids, and contemporaneously will oxidate more.

With the entrance in the depurator of a new amount of water, the one present in the central part of the Control-Flug will be set forward, through the exit hole out of the depurator.

When the water goes down in the depurator, the water present in the side sectors of the Control-Flug will pass to central sector, waiting for a new outflow.

As it can be understood, the Control-Flug is a very important piece in the depurator's functioning, since due to its shape it avoids the fluid movements and allows a successive aerobic fermentation, to complement the former fermentations.

The waters leaving the depurator are practically deprived of the solid particles, and with a very low value of polluted substances (B.O.D.5).

The main characteristics of this depurator are: the optimal efficiency, the ample scale of sizes as it has been shown in Fig. 2, 6, 7), the lack of expenses of use and maintenance (once installed and correctly used, it does not need any expenses nor maintenance whatsoever), its reduced dimensions, the lightness of its parts, the facility of its handling and transportation, the fastness of assembling and possibility, if there are weight problems, to construct the internal elements in lamina of PVC or in glass fiber.

The characteristics of Bio-depurator are listed in Table 1 wherein the first column refers to the type of Bio-depurator (Bio-dep 10 comprising only one ring, Bio-dep 15 comprising 2 rings, Bio-dep 20 comprising 3 rings and Bio-dep 25 comprising 3 rings).

**TABLE I**

| Type | Size | No. of users | Useful capacity in liters | Maximum external measure | Total height | Height of each element | Minimum prefundity entry | Minimum profondity exit |
|---|---|---|---|---|---|---|---|---|
| Bio-Dep.10 | reduced | 10 | 850 | 0,81 x 1,01 | 1,68 | 0,515 | 23 | 28 |
| Bio-Dep.15 | normal | 15 | 1,165 | 0,81 x 1,01 | 2,19 | 0,515 | 23 | 28 |
| Bio-Dep.20 | with 1 ring | 20 | 1,490 | 0,81 x 1,01 | 2,71 | 0,515 | 23 | 28 |
| Bio-Dep.25 | with 2 rings | 25 | 1,815 | 0,81 x 1,01 | 3,22 | 0,515 | 23 | 28 |
| Bottom Element | normal | = | 335 | 0,81 x 1,01 | = | 0,58 | = | = |

## Claims

1. A premanufactured biological depurator, of elongated, octagonal design, comprising of top element (2) and a bottom element (1) and one or more superimposed ringshaped, high resistance concrete made modular elements (3), **characterised in that**:
(a) the internal space of depurator is divided in two sectors (I and II) by a vertical partition element (4), a duct of passage (fig. 4, 4A and 4B) being provided between said sectors at the intermediate part thereof,
(b) Sector (I) is connected to the inlet (5) and sector (II) to the outlet of the depurator,
(c) said connection of sector (II) to the outlet of depurator includes a Control-flug (fig. 3 and fig. 3A), which is a stagnation-decantation device, to allow last solid trace to separate from outgoing liquid,
(d) said Control-flug comprises side sectors and a central sector, said central sector being connected to the outlet of the depurator.

2. A premanufactured biological depurator according to claim 1, **characterized in that** the liquid inlet duct has a trapezoidal form (5) and is located at a lower level with respect to the surface of the liquid inside the depurator.

3. A premanufactured biological depurator according to claims 1 or 2, **characterized in that** the external wall of the Control-flug (Fig. 3B) is a portion of the wall of the biological depurator top part.

## Patentansprüche

1. Vorgefertigte biologische Reinigungsvorrichtung mit langgestrecktem, oktogonalem Aufbau, die ein oberes Element (2) und ein unteres Element (1) und eines oder mehrere übereinander gelagerte, ringförmige hochwiderstandsfähige modulare Elemente (3) aus Beton umfasst, **dadurch gekennzeichnet, dass**
(a) der Innenraum der Reinigungsvorrichtung durch ein vertikales Trennelement (4) in zwei Sektoren (I und II) unterteilt ist, wobei eine Durchführungsleitung (Fig. 4, 4A und 4B) zwischen den Sektoren an deren dazwischen liegendem Teil vorhanden ist,
(b) der Sektor (I) mit dem Einlass (5) und der Sektor (II) mit dem Auslass der Reinigungsvorrichtung verbunden ist,
(c) die Verbindung des Sektors (II) zum Auslass der Reinigungsvorrichtung ein Steuerbauteil (Fig. 3 und Fig. 3A) umfasst, welches eine Stagnations-Dekantier-Einrichtung ist, um die Trennung letzter Feststoffspuren von der ausfließenden Flüssigkeit zu ermöglichen,
(d) das Steuerbauteil Seitensektoren und einen mittleren Sektor umfasst, wobei der mittlere Sektor mit dem Auslass der Reinigungsvorrichtung verbunden ist.

2. Vorgefertigte biologische Reinigungsvorrichtung nach Anspruch 1, **dadurch gekennzeichnet, dass** die Flüssigkeitseinlassleitung eine Trapezform (5) aufweist und bezüglich der Oberfläche der Flüssigkeit im Inneren der Reinigungsvorrichtung auf einem darunter liegenden Niveau angeordnet ist.

3. Vorgefertigte biologische Reinigungsvorrichtung nach Anspruch 1 oder 2, **dadurch gekennzeichnet, dass** die Außenwand des Steuerbauteils (Fig. 3B) ein Abschnitt der Wand des oberen Teils der biologischen Reinigungsvorrichtung ist.

## Revendications

1. Purificateur biologique préfabriqué, de forme octogonale allongée, comprenant une partie supérieure (2), une partie inférieure (1) et une ou plusieurs parties modulaires en béton à haute résistance de forme annulaire superposées (3), **caractérisé en ce que** :
(a) l'espace interne du purificateur est divisé en deux secteurs (I et II) par un élément de partage vertical (4), un passage de conduite (fig. 4, 4A et 4B) étant prévu entre lesdits secteurs au niveau de la partie intermédiaire de ceux-ci,
(b) le secteur (I) est raccordé à l'orifice d'entrée (5) et le secteur (II) est raccordé à l'orifice de sortie du purificateur,
(c) ledit raccordement du secteur (II) à l'orifice de sortie du purificateur inclut un dispositif de contrôle d'écoulement (fig. 3 et fig. 3A), qui est un dispositif de stagnation-décantation, pour permettre aux dernières traces de solide d'être séparées du liquide sortant,
(d) ledit dispositif de contrôle d'écoulement comprend des secteurs latéraux et un secteur central, ledit secteur central étant raccordé à l'orifice de sortie du purificateur.

2. Purificateur biologique préfabrigué selon la revendication 1, **caractérisé en ce que** la conduite d'entrée de liquide présente une forme trapézoïdale (5) et est située à un niveau inférieur par rapport à la surface du liquide à l'intérieur du purificateur.

3. Purificateur biologique préfabriqué selon les revendications 1 ou 2, **caractérisé en ce que** la paroi externe du dispositif de contrôle d'écoulement (fig. 3B) est une fraction de la paroi de la partie supérieure du purificateur biologique.
